# FASCICULE DE BREVET EUROPEEN

(11) **EP 4 329 465 B1**
(45) Date de publication et mention de la délivrance du brevet: **01.01.2025**
(21) Numéro de dépôt: 22723484.6
(22) Date de dépôt: 04.05.2022
(51) Int. Cl.: A01B 39/16, A01B 39/26, A01B 39/18

(54) **DISPOSITIF D'ACTIONNEMENT INTERMITTENT POUR OUTIL AGRICOLE**
INTERMITTIERENDE BETÄTIGUNGSVORRICHTUNG FÜR LANDWIRTSCHAFTLICHES GERÄT
INTERMITTENT ACTUATION DEVICE FOR AGRICULTURAL IMPLEMENT

(30) Priorité: 23.06.2021 FR 2106688
(43) Date de publication de la demande: 06.03.2024
(73) Titulaire: Sabi Agri, 63360 Saint-Beauzire (FR)
(72) Inventeur: PREVAULT, Alexandre, 63360 Saint-Beauzire (FR)
(74) Mandataire: Gabriel, Franck
(86) Numéro de dépôt international: PCT/IB2022/054101
(87) Numéro de publication internationale: WO 2022/269375

(56) Documents cités:
- DE-A1- 3 222 503
- FR-A- 1 390 651
- IT-A1- BA20 130 057
- SU-A1- 1 436 899
- US-A- 3 177 950

## Description

### DOMAINE TECHNIQUE DE L'INVENTION

La présente invention concerne un dispositif d'actionnement intermittent pour outil agricole pour la mise en place d'au moins un outil agricole dans un espace de travail interrompu par des obstacles espacés les uns des autres, comprenant un boîtier connectable au châssis d'un véhicule agricole, un arbre d'actionnement pour un outil agricole, un moteur et un détecteur d'obstacles à contourner.

### ETAT DE LA TECHNIQUE ANTERIEURE

Les modes d'agriculture respectueux de l'environnement, tel que l'agriculture biologique, l'agriculture équitable, sont de plus en plus en vogue. De nombreux labels en tous genres veulent attirer l'attention des consommateurs de plus en plus attentifs à la préservation de l'environnement et à la qualité des produits cultivés. Un des principaux contributeurs à cette agriculture consiste à remplacer les herbicides chimiques par un traitement mécanique du sol à l'aide d'outils adaptés, qui sont déplacés par un véhicule afin de mettre en oeuvre ce travail.

Pour remplacer les désherbants chimiques, on connaît diverses méthodes de travail mécanique du sol avec divers types d'outils. Pour les cultures industrielles, des véhicules agricoles tels que des tracteurs permettent de déplacer des outils le long des cultures. Dans le cas particulier du désherbage entre des plantes disposées en rangées, comme par exemple pour les plants de vignes, les outils doivent pouvoir effectuer un travail entre les plantes, sans endommager ces dernières lorsque l'outil s'en approche. De nombreux dispositifs ont été conçus à cet effet. Ces dispositifs permettent, à l'approche d'un plant cultivé, de déplacer les outils pour contourner les plants puis reprendre la position suivant l'alignement des plants une fois la plante dépassée.

Par exemple, dans le cas d'un interceps mécanique, les mouvements de l'effacement et/ou du retour de l'outil sont assurés par un simple ressort. Certains dispositifs utilisent un palpeur couplé à l'outil. Sous l'effet du déplacement, lorsque le palpeur s'approche de la plante, il est repoussé par celle-ci et l'outil connecté au palpeur se déplace en évitant la plante. Après le contournement, un ressort assure la remise en place de l'outil. Le réglage de ces dispositifs est particulièrement délicat. Une forte tension du ressort permet de travailler sur sol dur mais la sensibilité de détection est affectée. A l'inverse, une faible tension dans le ressort sur sol dur ne permet pas à la l'outil de revenir correctement après l'effacement.

On connaît également le document FR3093273 qui décrit notamment un interceps, pour le travail du sol, comprenant un bâti, un outil destiné au travail du sol, un palpeur, placé en avant dudit outil, destinée à détecter la présence d'un obstacle, ledit outil et ledit palpeur étant montés pivotant entre une position engagée et une position dégagée, un moteur électrique apte à entraîner le passage dudit outil de ladite position dégagée à ladite position engagée remarquable en ce que ledit palpeur est associé à un capteur de pression, apte à mesurer la pression exercée sur le palpeur, le passage de ladite position engagée vers ladite position dégagée étant asservie à la détection d'une pression prédéfinie par ledit capteur de pression et ledit interceps comprenant un moyen de calcul apte à traiter les informations en provenance dudit capteur de pression et à envoyer des commandes audit moteur électrique.

**On** connaît également le document FR2953095 qui décrit un dispositif interceps multifonctions comprenant essentiellement un bâti, un parallélogramme articulé, une semelle porte-outils et un palpeur destiné à la détection des souches. La semelle porte-outils comporte deux moyens adaptés pour faire travailler l'outil qui lui est associé, soit en mode « parallélogramme articulé », soit en mode « pivot », en fonction du type de vigne à travailler ou de tâche à exécuter. Le palpeur de détection comporte un moyen de réglage de sa résistance en rotation et une cellule apte à transmettre une information destinée au retrait automatique de l'outil et le vérin hydraulique limiteur de pression comporte un moyen de détection d'accrochage d'un pied de vigne apte à transmettre une information destinée à déclencher un signal d'alerte.

Le document EP0399137 décrit un dispositif dans lequel l'outil de travail du sol est commandé par un capteur et contourne la zone des racines de la plante concernée, dans la mesure où l'outil de travail du sol pivote vers l'arrière sous l'impulsion du capteur, lors de la détection d'un objet dans le sens de la marche. Afin d'éviter tout endommagement, l'invention prévoit que le capteur est constitué d'un capteur à ultrasons, d'un capteur à infrarouges, d'un capteur à laser, d'un capteur à radar ou d'un capteur analogue, dont le lobe de rayonnement est approximativement parallèle au bord de travail de l'outil de travail du sol, et à une certaine distance de ce dernier, dans le sens de travail.

Le document DE3222503 décrit un appareil de défrichage de la vigne pour éviter la croissance des mauvaises herbes et de l'herbe entre les vignes d'un vignoble, qui peut être fixé latéralement à un dispositif de levage et d'abaissement hydraulique et qui se compose d'un moteur relié au système hydraulique du tracteur et portant un disque de coupe pour l'élimination des herbes.

Le document FR1390651 décrit un dispositif bineur-décavaillonneur pour charrue vigneronne ou autre machine porte-outils. Le véhicule porte un dispositif bineur rotatif, à axe vertical, qui, sous l'effet d'une tringle tâteuse agissant par commande hydraulique, travaille et s'efface obliquement, pour éviter de toucher les plantations, et revient aussitôt en position de travail interligne et interceps.

Tous ces dispositifs sont relativement complexes, lourds et coûteux, avec une fiabilité parfois incertaine. Les dispositifs hydrauliques sont particulièrement lourds, jusqu'à rendre leur démontage impossible par une personne seule, énergivores et mal adaptés à des utilisation avec énergie électrique.

Il existe donc un besoin pour un dispositif permettant de guider un outil agricole d'une part selon un alignement de plants pour effectuer un travail dans le sol le long de cet alignement et d'autre part à l'écart de cet alignement lorsque l'outil s'approche d'un plant du fait de l'avancement du véhicule portant le ou les outils. Les besoins sont importants pour un dispositif compact, léger, pouvant fonctionner à l'énergie électrique avec une faible consommation.

**Pour** pallier ces différents inconvénients, l'invention prévoit différents moyens techniques.

### EXPOSE DE L'INVENTION

Tout d'abord, un premier objectif de l'invention consiste à prévoir un dispositif d'actionnement intermittent pour outil agricole qui soit compacte et léger.

Un autre objectif de l'invention consiste à prévoir un dispositif d'actionnement intermittent pour outil agricole dont la construction est peu coûteuse.

Un autre objectif de l'invention consiste à prévoir un dispositif d'actionnement intermittent pour outil agricole permettant un fonctionnement avec une alimentation électrique, avec faible consommation, pour fournir une grande autonomie.

Un autre objectif de l'invention consiste à prévoir un dispositif d'actionnement intermittent pour outil agricole permettant de fixer des outils lourds et/ou déportés de façon fiable, sans vibration, et sans déformation.

Pour ce faire, l'invention prévoit un dispositif d'actionnement intermittent pour outil agricole pour mise en place d'au moins un outil agricole dans un espace de travail interrompu par des obstacles espacés les uns des autres, comprenant :
- un boîtier connectable à un châssis d'un véhicule agricole (tracteur) ;
- un arbre d'actionnement pour au moins un outil agricole ;
- une chaîne d'entraînement dudit arbre d'actionnement agencée dans le boîtier et permettant d'effectuer un positionnement intermittent du au moins un outil agricole dans l'espace de travail, ladite chaîne d'entraînement comprenant un module de commande;
- un détecteur d'obstacles à éviter, connecté audit module de commande;
- ledit arbre d'actionnement traversant un pignon mené connecté à la chaîne d'entraînement et disposé dans le boîtier ;
- ledit arbre d'actionnement comportant deux extrémités, chacune des deux extrémités s'étendant hors du boîtier pour permettre la connexion d'outils agricoles à chacune de ces deux extrémités.

Une telle architecture permet de réaliser un dispositif à fiable poids et encombrement. Les deux extrémités libres de l'arbre permettent de fournir un mode de fixation d'outils particulièrement rigide.

Selon un mode de réalisation avantageux, la chaîne d'entraînement comporte un servomoteur électrique entraînant un réducteur et un pignon menant.

Le couplage d'un servomoteur électrique et d'un réducteur permet d'utiliser un moteur à faible coût, le couple étant obtenu grâce au réducteur. La consommation électrique de tels moteurs étant faible, l'autonomie du dispositif est importante, permettant d'effectuer des travaux sur des grandes étendues sans interruption pour recharger les batteries.

De manière avantageuse, le réducteur sert également de renvoi d'angle pour actionnement du pignon mené par le pignon menant, le pignon menant et l'arbre d'actionnement étant coaxiaux.

Cet agencement contribue à la compacité du dispositif. L'architecture avec entraînement par pignon agencé le long de l'arbre permet de libérer les deux extrémités, qui peuvent ainsi servir de double point de fixation pour des outils.

Selon un mode de réalisation avantageux, le détecteur d'obstacle comporte un palpeur, mobile angulairement et connecté à un détecteur de position angulaire du palpeur.

De manière avantageuse, le détecteur de position comporte une roue dentée coopérant avec une couronne dentée. Cet agencement est simple, léger, et fiable.

De manière avantageuse, le palpeur comporte un ressort de rappel. Ce moyen de rappel du palpeur est simple et léger. Le ressort ne servant pas à déplacer l'outil, il ne subit pas de fortes contraintes.

Selon un exemple de réalisation, l'outil agricole est un disque incurvé comportant une pluralité de dents, relié à l'arbre d'actionnement par deux bras, chacun des bras étant connecté à une extrémité opposée de l'arbre d'actionnement.

La double fixation avec des bras espacés l'un de l'autre procure une excellente rigidité. L'outil est fixé de façon stable et durable. Ceci permet d'utiliser des outils lourds et/ou fortement déportés par rapport à l'arbre d'actionnement.

### DESCRIPTION DES FIGURES

Tous les détails de réalisation sont donnés dans la description qui suit, complétée par les figures 1 à 10, présentées uniquement à des fins d'exemples non limitatifs, et dans lesquelles :
- la figure 1 est une vue en coupe d'un exemple de dispositif d'actionnement intermittent pour outil agricole;
- la figure 2 est une vue en perspective d'un exemple de dispositif d'actionnement intermittent pour outil agricole portant un disque denté avec fixation aux deux extrémité de l'arbre d'actionnement;
- la figure 3 est une vue en perspective d'un exemple de palpeur;
- la figure 4 montre le palpeur de la figure 3 en vue de côté;
- la figure 5 montre la coupe F-F de la figure 4;
- la figure 6 montre le palpeur de la figure 3 en vue de dessus ;
- la figure 7 est une vue de dessus d'un exemple d'outil en position de travail en phase d'approche d'un pied de vigne ;
- la figure 8 est une vue de dessus d'un exemple d'outil en phase d'escamotage ou de positionnement en position d'évitement ;
- la figure 9 est une vue de dessus d'un exemple d'outil en phase de repositionnement en position de travail ;
- la figure 10 est une vue en perspective d'un exemple de dispositif d'actionnement intermittent pour outil agricole portant une lame sarcleuse et une dent ouvreuse.

### DESCRIPTION DETAILLEE DE L'INVENTION

### Outil à déplacement intermittent ou sinusoïdal

Lorsqu'un tracteur ou autre véhicule agricole effectue un travail mécanique du sol à l'aide d'un ou plusieurs outils 10 agricoles en se déplaçant le long d'un alignement de plantes tel que des vignes, le dispositif 1 d'actionnement intermittent, qui porte le ou les outils, permet de les positionner soit en position de travail, en alignement avec le rang de plantes, soit en position d'évitement des plantes, hors de la trajectoire d'alignement des plantes, pour éviter de contacter les plantes lors de l'avancement du véhicule. Ainsi, en fonction de l'avancement du véhicule le long de l'alignement de plantes, le ou les outils effectuent un déplacement ressemblant à une courbe sinusoïdale. Un tel dispositif 1 d'actionnement intermittent est souvent désigné par le terme « interceps ».

### Architecture et fonctionnement

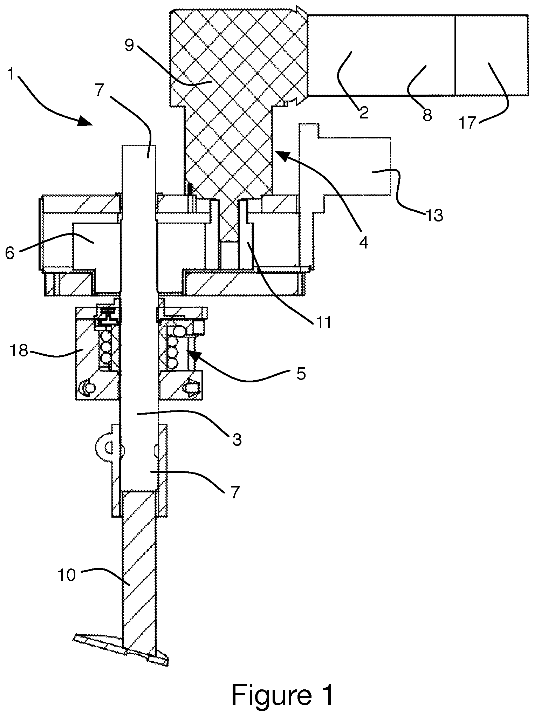

La figure 1 illustre une vue de face d'un exemple de dispositif 1 d'actionnement intermittent pour outil 10 agricole. Un boîtier 2 loge une chaîne 4 mécanique d'entraînement reliée à un arbre 3 d'actionnement d'un ou plusieurs outils 10 agricoles. Le boîtier 2, en plus de maintenir et protéger les éléments de la chaîne mécanique d'entraînement, permet de fixer le dispositif 1 d'actionnement intermittent au châssis d'un véhicule ou à un accessoire d'un véhicule par l'entremise d'une interface de fixation 13. La chaîne 4 d'entraînement permet de produire des déplacements angulaires de l'arbre 3 afin de positionner le ou les outils de travail soit en position de travail, soit en position d'évitement d'un obstacle, en particulier une plante à contourner, comme par exemple un pied de vigne. En position de travail, le ou les outils sont alignés avec une rangée de plantes entre lesquelles un travail mécanique de la terre doit être effectué. En position d'évitement, le ou les outils sont déplacés de façon à ne pas entrer en contact avec les plantes et ainsi éviter tout dommage à ces dernières.

Dans l'exemple illustré, la chaîne 4 mécanique d'entraînement comporte un servomoteur 8 électrique pourvu d'un module de commande 17. Le servomoteur 8 entraîne un réducteur 9. Ce montage moteur-réducteur permet d'utiliser un moteur peu coûteux, en utilisant le réducteur pour générer un couple suffisant pour actionner les outils en cours de travail dans le sol. Par exemple, un servomoteur de puissance 600W, tournant entre 2500 et 6000 tours/min, avec une réduction de 100, permet d'obtenir des résultats très favorables avec des outils tels que des lames de binage ou des disques de désherbage.

Tel qu'illustré, le réducteur 9 sert également de renvoi d'angle, de préférence à 90°. Il entraîne un pignon menant 11, coopérant avec un pignon mené 6. L'arbre 3 d'actionnement traverse le pignon mené 6 en son centre et reste solidaire de ce dernier, avec un assemblage par clavetage, collage ou serrage ou à l'aide de cannelures axiales empêchant à l'arbre de tourner sans le pignon mené 6. Les deux extrémités 7 de l'arbre d'actionnement s'étendent au-delà du boîtier 2 et sont ainsi accessibles pour assurer deux points de connexion avec un ou plusieurs outils 10 agricole.

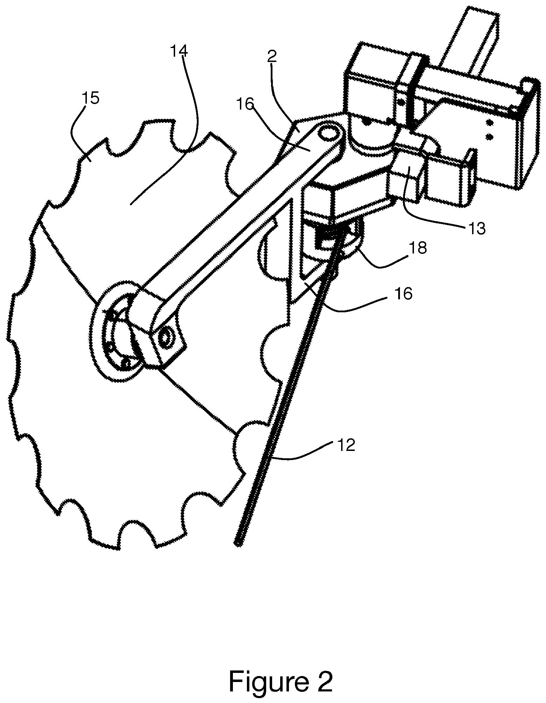

La figure 2 illustre un exemple d'outil 10 agricole comportant deux bras 16 pour connexion avec chacune des extrémités 7 de l'arbre 3 d'entraînement. Les deux points de fixation de l'outil aux deux extrémités 7 de l'arbre 3 assurent un haut niveau de rigidité et un assemblage résistant aux efforts souvent très élevés générés lors du travail dans le sol. Dans cet exemple, l'outil 10 agricole comporte un disque 14 de préférence incurvé, pourvu de dents 15 périphériques. Les deux bras 16 servent de porte-outil. L'arbre 3 d'actionnement permet de positionner l'outil en position de travail ou en position d'évitement d'obstacle tel que préalablement décrit.

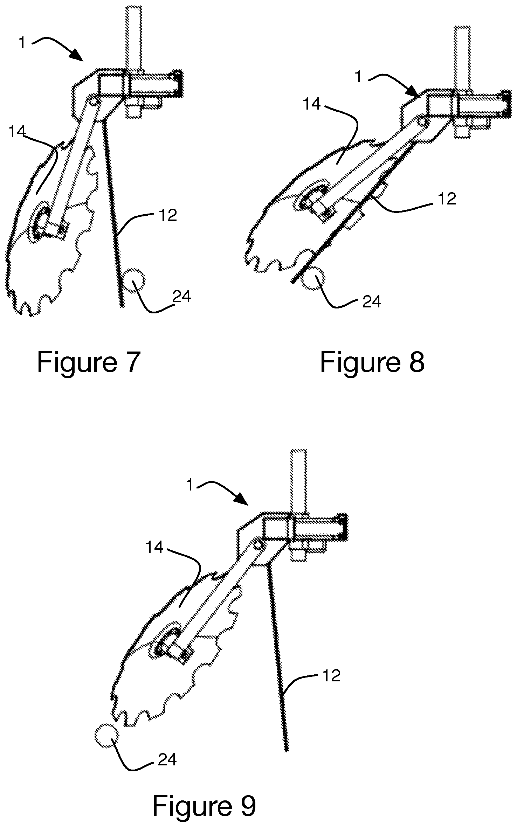

La gestion des évitements d'obstacle est réalisée au moyen d'un détecteur 5 d'obstacle, connecté au module de commande 17 du servomoteur. En fonction de la détection des obstacles, le module de commande actionne le servomoteur dans un sens pour placer l'outil en position de travail, ou dans le sens opposé, pour placer l'outil en position d'évitement d'obstacle, tel que montré dans les exemples des figures 7, 8 et 9. Plusieurs types de détecteurs peuvent être utilisés, comme par exemple une ou plusieurs caméras, un ou plusieurs radars ou lidars, etc.

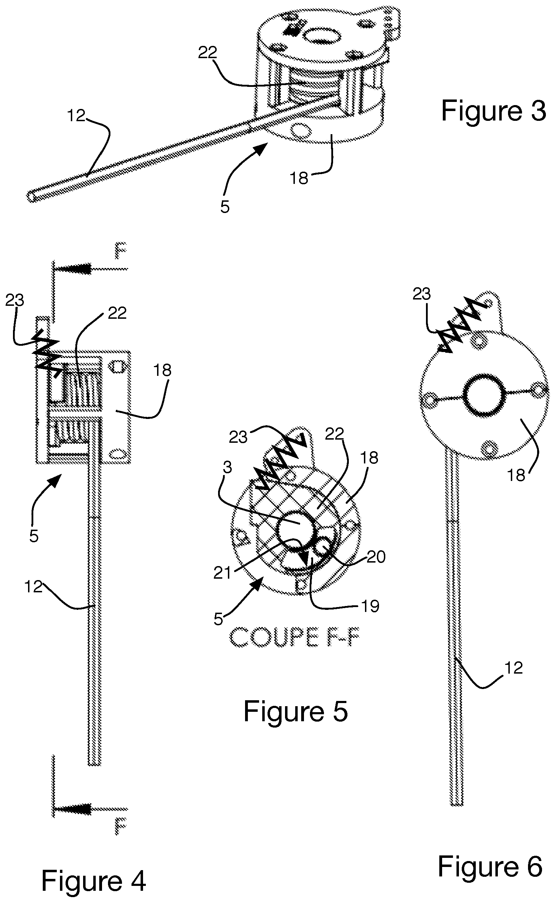

Dans l'exemple des figures 1, 2 et des figures 3 à 6, le détecteur d'obstacle comporte un palpeur 12 monté sur une bague 18 coaxiale avec l'arbre 3 d'actionnement. Le palpeur 12 comporte une portion interne 22 à la bague 18 qui est couplée à un détecteur de position 19. Dans cet exemple, le détecteur de position comporte un potentiomètre actionné par une roue dentée 20 à sa périphérie coopérant avec une couronne dentées prévue à l'intérieur de la bague 18. Lorsque le palpeur est actionné, en particulier par contact avec une plante à contourner, la portion interne 22 de la bague actionne la roue dentée 20, commandant le potentiomètre. Ce dernier est relié au module de commande 17, qui peut ainsi déterminer la position à donner à l'outil. Lorsque le palpeur contacte une plante et se déplace angulairement en avançant vers la plante, le module de commande est conçu pour commander un déplacement du ou des outils à l'écart de la plante, en position d'évitement. Une fois la plante dépassée, le palpeur est libre et un ressort de rappel 23 lui permet de revenir vers sa position par défaut. Le module de commande est alors conçu pour commander un déplacement du ou des outils en position de travail.

Deux agencements peuvent être utilisées pour la bague 18. Elle peut être fixe par rapport à l'arbre d'actionnement, créant ainsi une commande différentielle. Elle peut être fixe par rapport au boîtier, ce qui crée une commande absolue.

Les figures 7, 8 et 9 illustrent un exemple de séquence de travail. A la figure 7, en approche d'un pied de vigne 24, le palpeur 12 entre en contact avec la plante et commence à se déplacer angulairement. A la figue 8, le palpeur est décalé angulairement, l'information de déplacement a été transmise au module de commande qui envoie une consigne de déplacement de l'outil en position d'évitement à la chaîne de mécanique d'entraînement. A la figure 9, le palpeur est libéré et reprend sa position initiale, l'information de déplacement est transmise au module de commande qui envoie une consigne de déplacement de l'outil vers la position de travail à la chaîne mécanique d'entraînement.

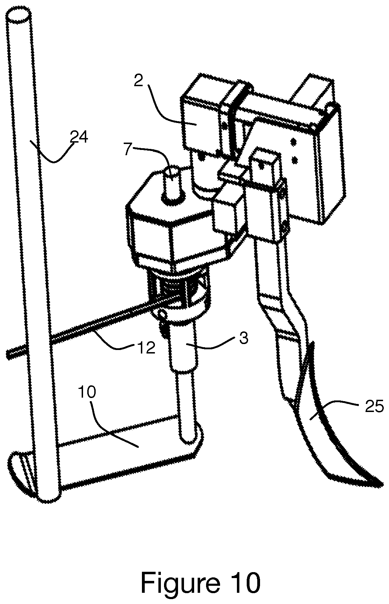

La figure 10 illustre une variante d'utilisation du dispositif 1 d'actionnement dans lequel l'outil 10 est une lame simple agencée à l'extrémité inférieure de l'arbre 3. Une dent ouvreuse 25 est par ailleurs fixée au boîtier 2. Contrairement à l'outil 10 qui est monté pivotant, la lame ouvreuse est fixe et agencée de façon à se trouver décalée en regard de l'alignement de plantes.

### Numéros de référence employés sur les figures

| | | | |
|---|---|---|---|
| 1. | Dispositif d'actionnement intermittent | 14. | Disque incurvé |
| 2. | Boîtier | 15. | Dents de disque |
| 3. | Arbre | 16. | Bras |
| 4. | Chaîne mécanique d'entraînement | 17. | Module de commande |
| 5. | Détecteur d'obstacle | 18. | Bague |
| 6. | Pignon mené | 19. | Détecteur de position |
| 7. | Extrémité d'arbre | 20. | Roue dentée |
| 8. | Servomoteur électrique | 21. | Couronne dentée |
| 9. | Réducteur | 22. | Portion interne du palpeur |
| 10. | Outil agricole | 23. | Ressort de rappel |
| 11. | Pignon menant | 24. | Obstacle (pied de plante tel que vigne) |
| 12. | Palpeur | | |
| 13. | Interface de fixation au véhicule | 25. | Dent ouvreuse |

## Revendications

1. Dispositif (1) d'actionnement intermittent pour outil agricole (10) pour mise en place d'au moins un outil agricole (10) dans un espace de travail interrompu par des obstacles (24) espacés les uns des autres, comprenant :
- un boîtier (2) connectable à un châssis d'un véhicule agricole;
- un arbre (3) d'actionnement pour au moins un outil agricole ;
- une chaîne (4) d'entraînement dudit arbre (3) d'actionnement agencée dans le boîtier et permettant d'effectuer un positionnement intermittent du au moins un outil agricole (10) dans l'espace de travail, ladite chaîne (4) d'entraînement comprenant un module de commande (17);
- un détecteur (5) d'obstacles à éviter, connecté audit module de commande (17);
- ledit arbre (3) d'actionnement traversant un pignon mené (6) connecté à la chaîne (4) d'entraînement et disposé dans le boîtier ;
- ledit arbre (3) d'actionnement comportant deux extrémités (7), chacune des deux extrémités s'étendant hors du boîtier (2) pour permettre la connexion d'outils agricoles (10) à chacune de ces deux extrémités.

2. Dispositif d'actionnement selon la revendication 1, dans lequel la chaîne (4) d'entraînement comporte un servomoteur (8) électrique entraînant un réducteur (9) et un pignon menant (11).

3. Dispositif d'actionnement selon la revendication 2, dans lequel le réducteur (9) sert également de renvoi d'angle pour actionnement du pignon mené (6) par le pignon menant (11), le pignon menant (11) et l'arbre (3) d'actionnement étant coaxiaux.

4. Dispositif d'actionnement selon la revendication 1, dans lequel le détecteur (5) d'obstacle comporte un palpeur (12), mobile angulairement et connecté à un détecteur (19) de position angulaire du palpeur.

5. Dispositif d'actionnement selon la revendication 4, dans lequel le détecteur de position (19) comporte une roue dentée (20) coopérant avec une couronne dentée (21).

6. Dispositif d'actionnement selon la revendication 4, dans lequel le palpeur (12) comporte un ressort (23) de rappel.

7. Dispositif d'actionnement selon l'une quelconque des revendications 1 à 6, dans lequel l'outil agricole (10) est un disque (14) incurvé comportant une pluralité de dents (15), relié à l'arbre (3) d'actionnement par deux bras (16), chacun des bras étant connecté à une extrémité (7) opposée de l'arbre (3) d'actionnement.

## Patentansprüche

1. Intermittierende Betätigungsvorrichtung (1) für ein landwirtschaftliches Gerät (10) zum Positionieren mindestens eines landwirtschaftlichen Geräts (10) in einem Arbeitsraum, der durch voneinander beabstandete Hindernisse (24) unterbrochen ist, mit:
- ein Gehäuse (2), das mit einem Fahrgestell eines landwirtschaftlichen Fahrzeugs verbunden werden kann;
- eine Antriebswelle (3) für mindestens ein landwirtschaftliches Gerät;
- eine Antriebskette (4) für die Antriebswelle (3), die in dem Gehäuse angeordnet ist und eine intermittierende Positionierung des mindestens einen landwirtschaftlichen Geräts (10) im Arbeitsraum ermöglicht, wobei die Antriebskette (4) ein Steuermodul (17) umfasst;
- einen Detektor (5) für zu umfahrende Hindernisse, der mit dem Steuermodul (17) verbunden ist;
- wobei die Antriebswelle (3) durch ein angetriebenes Ritzel (6) verläuft, das mit der Antriebskette (4) verbunden und in dem Gehäuse angeordnet ist;
- wobei die Antriebswelle (3) zwei Enden (7) aufweist, wobei sich jedes der beiden Enden aus dem Gehäuse (2) heraus erstreckt, um den Anschluss von landwirtschaftlichen Geräten (10) an jedes der beiden Enden zu ermöglichen.

2. Betätigungsvorrichtung nach Anspruch 1, bei der die Antriebskette (4) einen elektrischen Servomotor (8) umfasst, der ein Untersetzungsgetriebe (9) und ein Antriebsritzel (11) antreibt.

3. Betätigungsvorrichtung nach Anspruch 2, wobei das Untersetzungsgetriebe (9) auch als Winkelgetriebe zur Betätigung des angetriebenen Ritzels (6) durch das treibende Ritzel (11) dient, wobei das treibende Ritzel (11) und die Antriebswelle (3) koaxial angeordnet sind.

4. Betätigungsvorrichtung nach Anspruch 1, bei der der Hindernisdetektor (5) einen Taster (12) umfasst, der winkelbeweglich und mit einem Detektor (19) für die Winkelposition des Tasters verbunden ist.

5. Betätigungsvorrichtung nach Anspruch 4, bei der der Positionsdetektor (19) ein Zahnrad (20) aufweist, das mit einem Zahnkranz (21) zusammenwirkt.

6. Betätigungsvorrichtung nach Anspruch 4, bei der der Taster (12) eine Rückstellfeder (23) aufweist.

7. Betätigungsvorrichtung nach einem der Ansprüche 1 bis 6, wobei das landwirtschaftliche Gerät (10) eine gekrümmte Scheibe (14) mit einer Vielzahl von Zähnen (15) ist, die über zwei Arme (16) mit der Antriebswelle (3) verbunden ist, wobei jeder der Arme mit einem gegenüberliegenden Ende (7) der Antriebswelle (3) verbunden ist.

## Claims

1. Intermittent actuating device (1) for an agricultural implement (10) for positioning at least one agricultural implement (10) in a working space interrupted by mutually-spaced obstacles (24), comprising:
- a housing (2) connectable to a chassis of an agricultural vehicle;
- a drive shaft (3) for at least one agricultural implement;
- a drive chain (4) for said actuating shaft (3) arranged in the housing and enabling intermittent positioning of the at least one agricultural implement (10) in the working space, said drive chain (4) comprising a control module (17);
- an obstacle avoidance detector (5) connected to said control module (17);
- said drive shaft (3) passing through a driven pinion (6) connected to the drive chain (4) and arranged in the housing;
- said actuating shaft (3) having two ends (7), each of the two ends extending out of the housing (2) to enable agricultural implements (10) to be connected to each of these two ends.

2. Actuating device according to claim 1, in which the drive chain (4) comprises an electric servomotor (8) driving a reduction gear (9) and a drive pinion (11).

3. Actuating device according to claim 2, in which the reduction gear (9) also serves as a bevel gear for actuation of the driven pinion (6) by the driving pinion (11), the driving pinion (11) and the actuator shaft (3) being coaxial.

4. Actuating device according to claim 1, wherein the obstacle detector (5) comprises an angularly movable feeler (12) connected to a sensor angular position detector (19).

5. Actuating device according to claim 4, wherein the position detector (19) comprises a gear wheel (20) cooperating with a ring gear (21).

6. Actuating device according to claim 4, in which the feeler (12) comprises a return spring (23).

7. Actuating device according to any one of claims 1 to 6, wherein the agricultural tool (10) is a curved disc (14) having a plurality of teeth (15), connected to the actuating shaft (3) by two arms (16), each of the arms being connected to an opposite end (7) of the actuating shaft (3).
